# EUROPEAN PATENT APPLICATION

(11) **EP 4 625 088 A1**
(43) Date of publication of application: **01.10.2025**
(21) Application number: 25167107.9
(22) Date of filing: 28.03.2025
(51) Int. Cl.: G05D 1/243, G06T 7/00, G01S 13/86, G06V 20/58, G01S 13/931, G01S 15/931, G01S 17/86, G01S 17/931, G05D 1/633, G05D 105/28, G05D 107/70, G05D 109/10, G05D 111/10

(54) **THERMAL IMAGING SENSING FOR AUTONOMOUS INDUSTRIAL VEHICLES**

(30) Priority: 29.03.2024 US 202463571660 P
(71) Applicant: The Raymond Corporation, Greene, NY 13778 (US)
(72) Inventor: BARTELS, Alan W., Wilton, IA (US)
(74) Representative: Zacco Sweden AB

(57) **Abstract**

Systems and methods of obstacle detection and AGV control comprise and/or utilize a thermal imaging sensor; and an automation processing system (APS) (110) having a processor and a memory, the APS (110) coupled with the thermal imaging sensor (202) and being configured to: receive sensor data based on an output of the thermal imaging sensor (202), process the sensor data to determine at least one of a presence or a motion of a heat-emitting obstacle (504, 506, 508) in a vicinity of the AGV (130), generate, based on the processed sensor data, an output comprising an indication of a control action for the AGV (130), and send the generated output to the VCS (210).

## Description

### CROSS-REFERENCE TO RELATED APPLICATIONS

This application claims priority to and the benefit of U.S. Provisional Application No. 63/571,660, filed March 29, 2024, and titled "Thermal Imaging Sensing for Autonomous Industrial Vehicles," the entire contents of which are herein incorporated by reference for all purposes.

### TECHNICAL FIELD

This disclosure relates to industrial vehicles, such as material handling vehicles. More particularly, the present disclosure relates to thermal image sensing for an autonomous industrial vehicle.

### BACKGROUND

Industrial vehicles of various types, including lift trucks, are used to move items at a facility such as a factory, a warehouse, a freight transfer station, or a retail store. Traditionally these vehicles were controlled by an on-board human operator. As industrial vehicles became more sophisticated, a new category of autonomous guided vehicles evolved. An autonomous guided vehicle (AGV) is a form of mobile robot that, without a human operator, transports goods and materials from one place to another in a constrained environment, such as a factory or a warehouse. AGVs are sometimes referred to as autonomous mobile robots (AMRs), and the terms are used interchangeably herein.

Some comparative examples of AGVs followed a wire buried in the floor and thus were limited to traveling along a fixed path defined by that wire. Guidance technology developed further so that the vehicle did not have to be confined to a fixed path. In some comparative examples an optical scanner such as a light detection and ranging (LiDAR) scanner is provided, which uses a signal field in the direction of travel to sense an obstacle. Some comparative examples implement scanners that can look to the side of the AGVs for obstacles. Other comparative examples track people, vehicles, or obstacles by use of a badge. These badge sensors can be mounted on trucks or part of the warehouse infrastructure. Still other comparative examples include systems that use cameras and line-of-sight (LOS) imaging to predict the presence of a human and, in some instances, attempt to predict the direction of travel of the human.

Regardless of the particular navigation system that was used, an AGV was unable to fully address common use cases, such as instances where a person may suddenly appear from the side into the path of the truck, instances where it is not feasible to fit every person who may interact with the AGV with a badge, instances where it is difficult to determine whether a detected obstacle is a human (e.g., if the person is carrying a large box, obscured by infrastructure, or in a wheelchair), and the like. These situations were, in the comparative examples, addressed by managing the environment of use, for example through training, facility layout, the use of restricted areas, and the like. These management strategies, however, are generally not possible in a non-industrial environment, such as a home building supply store.

Thus, it is desirable to provide a mechanism for sensing obstacles that is capable of use in a non-industrial environment and that overcomes these deficiencies.

### BRIEF SUMMARY

The present disclosure describes AGV control systems and methods which overcome the above-described and other disadvantages present in comparative examples of AGV control systems and methods.

According to one aspect of the present disclosure, an obstacle detection system for an autonomous guided vehicle (AGV) having a vehicle control system (VCS) is provided. The obstacle detection system comprises a thermal imaging sensor; and an automation processing system (APS) having a processor and a memory, the APS coupled with the thermal imaging sensor and being configured to: receive sensor data based on an output of the thermal imaging sensor, process the sensor data to determine at least one of a presence or a motion of a heat-emitting obstacle in a vicinity of the AGV, generate, based on the processed sensor data, an output comprising an indication of a control action for the AGV, and send the generated output to the VCS.

In some aspects, the APS includes a machine learning control program stored in the memory.

In some aspects, the APS is configured to provide the sensor data to the machine learning control program, and to receive a detection output from the machine learning control program, the detection output indicating the presence of the heat-emitting obstacle in the vicinity of the AGV.

In some aspects, the APS is configured to provide the sensor data to the machine learning control program, and to receive a movement output from the machine learning control program, the movement output indicating the motion of the heat-emitting obstacle in the vicinity of the AGV.

In some aspects, the obstacle detection system further comprises an auxiliary sensor, wherein the auxiliary sensor includes at least one of a grayscale image sensor, an RGB image sensor, an RGBD image sensor, a sonar sensor, a radar sensor, or a LiDAR sensor.

In some aspects, the sensor data includes a comparison of the output of the thermal imaging sensor and an output of the auxiliary sensor.

In some aspects, the APS operates in an environment and the sensor data includes a comparison of the output of the thermal imaging sensor and a predetermined map of the environment.

In some aspects, the thermal imaging sensor is one of a plurality of thermal imaging sensors, and wherein the plurality of thermal imaging sensors are disposed so as to provide thermal detection in a plurality of directions.

In some aspects, the plurality of thermal imaging sensors are disposed so as to provide thermal detection in a 360-degree field of view.

According to another aspect of the present disclosure, a method for controlling an autonomous guided vehicle (AGV) is provided. The method comprises receiving, by an automation processing system (APS) of the AGV, sensor data, the sensor data being based on an output of a thermal imaging sensor; processing, by a processor of the AGV, the sensor data to determine at least one of a presence or a motion of a heat-emitting obstacle in a vicinity of the AGV; generating, by the processor of the AGV and based on the processed sensor data, an output comprising an indication of a control action for the AGV; and sending the generated output to a vehicle control system (VCS) of the AGV.

In some aspects, the thermal imaging sensor is mounted on the AGV.

In some aspects, the processing is performed using a machine learning control program.

In some aspects, the machine learning control program is stored in a memory of the APS.

In some aspects, the processing includes providing the sensor data to the machine learning control program, and receiving a detection output from the machine learning control program, the detection output indicating the presence of the heat-emitting obstacle in the vicinity of the AGV.

In some aspects, the processing includes providing the sensor data to the machine learning control program, and receiving a movement output from the machine learning control program, the movement output indicating the motion of the heat-emitting obstacle in the vicinity of the AGV.

In some aspects, the sensor data includes auxiliary image data captured by at least one of a grayscale image sensor, an RGB image sensor, an RGBD image sensor, a sonar sensor, a radar sensor, or a LiDAR sensor.

In some aspects, the sensor data includes a comparison of the output of the thermal imaging sensor and a predetermined map of an environment in which the APS operates.

In some aspects, the thermal imaging sensor is one of a plurality of thermal imaging sensors, and wherein receiving the sensor data includes receiving data from the plurality of thermal imaging sensors corresponding to thermal detection in a plurality of directions.

In some aspects, the plurality of thermal imaging sensors are disposed so as to provide thermal detection in a 360-degree field of view.

According to another aspect of the present disclosure, a non-transitory computer-readable medium is provided. The non-transitory computer-readable medium stores instructions that, when executed by a processor of an autonomous guided vehicle (AGV), cause the AGV to perform operations comprising receiving, by an automation processing system (APS) of the AGV, sensor data, the sensor data being based on an output of a thermal imaging sensor; processing, by a processor of the AGV, the sensor data to determine at least one of a presence or a motion of a heat-emitting obstacle in a vicinity of the AGV; generating, by the processor of the AGV and based on the processed sensor data, an output comprising an indication of a control action for the AGV; and sending the generated output to a vehicle control system (VCS) of the AGV.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF THE DRAWINGS

FIG. 1 illustrates a block diagram of an example system architecture including an example AGV and an automation processing system, according to various aspects of the present disclosure.
FIG. 2A is a simplified block diagram of example input and output of an automation processing system, according to various aspects of the present disclosure.
FIG. 2B is a simplified block diagram showing multiple example inputs and an output of an automation processing system, according to various aspects of the present disclosure.
FIG. 3 is a block diagram illustrating example components of an example automation processing system and a vehicle control system, according to various aspects of the present disclosure.
FIG. 4 is a flowchart illustrating an example process for detecting obstacles and controlling an AGV, according to various aspects of the present disclosure.
FIG. 5 is a top view of an example AGV navigating an environment, according to various aspects of the present disclosure.
FIG. 6A is an image illustrating a detection field of a vehicle according to a comparative example.
FIG. 6B is an image illustrating a detection field of a vehicle according to various aspects of the present disclosure.

### DETAILED DESCRIPTION

The present disclosure may be implemented on or with the use of autonomous vehicles. While the present disclosure describes various examples in the context of an AGV operating in a non-industrial setting, the inventive concepts are applicable to other types of vehicles, including operator-controlled material handling vehicles, and their use in a variety of facilities, such as factories, freight transfer stations, warehouses, and retail stores, for example.

The detailed description set forth below in connection with the appended drawings is intended as a description of various configurations and is not intended to represent the only configurations in which the subject matter described herein may be practiced. The detailed description includes specific details to provide a thorough understanding of various embodiments of the present disclosure. However, it will be apparent to those skilled in the art that the various features, concepts, and embodiments described herein may be implemented and practiced without these specific details.

The present disclosure provides for thermal imaging systems, methods, and devices that may look in the direction of travel (e.g., both forward and reverse) and along both sides of the associated vehicle. Any heat emitting obstacle will give off a thermal image. Even if the obstacle in the image is carrying boxes, is pushing a cart, is in a wheelchair, is another truck, or is a pet, the system can acquire sufficient knowledge to determine that an obstacle is present. Continued monitoring of the heat-emitting obstacle can provide information as to whether or not the obstacle is moving closer. If the obstacle is getting closer, the AGV can predict if the paths will cross and make decisions on next steps. Thus, systems, methods, and devices in accordance with the present disclosure reduce the likelihood of someone or something moving in front of an AGV without the AGV already being aware of that possibility. Furthermore, in the case of an AGV approaching the end of an aisle, the use of thermal sensors increases the possibility of seeing at least a portion of a heat-emitting obstacle through and/or around boxes and pallets, further improving knowledge. Even if the sensor does not have enough time to fully image the obstacle, the sensor understands that the obstacle is present and may begin preparing for the obstacle.

Moreover, while the following description provides examples of imaging systems which use thermal sensors to detect heat-emitting obstacles, the present disclosure may be implemented using other sensors to detect other obstacles. In one example, references to a "thermal sensor" may be replaced with or supplemented by a "millimeter wave sensor" to detect the presence of obstacles by transmitting electromagnetic radiation with wavelengths in the millimeter range (e.g., around 4 mm) and receiving electromagnetic radiation reflected from the obstacles. In such examples, references to a "heat-emitting obstacle" may be replaced with or supplemented by a "mm Wave-reflective obstacle."

The present disclosure may be implemented on or with the use of computing devices including control units, processors, and/or memory elements, in some examples. As used herein, a "control unit" may be any computing device configured to send and/or receive information (e.g., including instructions) to/from various systems and/or devices. A control unit may comprise processing circuitry configured to execute operating routine(s) stored in a memory. The control unit may comprise, for example, a processor, microcontroller, application-specific integrated circuit (ASIC), field-programmable gate array (FPGA), and the like, any other digital and/or analog components, as well as combinations of the foregoing, and may further comprise inputs and outputs for processing control instructions, control signals, drive signals, power signals, sensor signals, and the like. All such computing devices and environments are intended to fall within the meaning of the term "controller," "control unit," "processor," or "processing circuitry," as used herein unless a different meaning is explicitly provided or otherwise clear from the context. The term "control unit" is not limited to a single device with a single processor, but may encompass multiple devices (e.g., computers) linked in a system, devices with multiple processors, special purpose devices, devices with various peripherals and input and output devices, software acting as a computer or server, and combinations of the above. In some implementations, the control unit may be configured to implement cloud processing, for example by invoking a remote processor.

Moreover, as used herein, the term "processor" may include one or more individual electronic processors, each of which may include one or more processing cores, and/or one or more programmable hardware elements. The processor may be or include any type of electronic processing device, including but not limited to central processing units (CPUs), graphics processing units (GPUs), ASICs, FPGAs, microcontrollers, digital signal processors (DSPs), or other devices capable of executing software instructions. When a device is referred to as "including a processor," one or all of the individual electronic processors may be external to the device (e.g., to implement cloud or distributed computing). In implementations where a device has multiple processors and/or multiple processing cores, individual operations described herein may be performed by any one or more of the microprocessors or processing cores, in series or parallel, in any combination.

As used herein, the term "memory" may be any storage medium, including a nonvolatile medium, e.g., a magnetic media or hard disk, optical storage, or flash memory; a volatile medium, such as system memory, e.g., random access memory (RAM) such as dynamic RAM (DRAM), synchronous dynamic RAM (SDRAM), static RAM (SRAM), extended data out (EDO) DRAM, extreme data rate dynamic (XDR) RAM, double data rate (DDR) SDRAM, etc.; on-chip memory; and/or an installation medium where appropriate, such as software media, e.g., a CD-ROM, or floppy disks, on which programs may be stored and/or data communications may be buffered. The term "memory" may also include other types of memory or combinations thereof. For the avoidance of doubt, cloud storage is contemplated in the definition of memory.

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As used herein, unless otherwise limited or defined, discussion of particular directions is provided by example only, with regard to particular embodiments or relevant illustrations. For example, discussion of "top," "front," or "back" features is generally intended as a description only of the orientation of such features relative to a reference frame of a particular example or illustration. Correspondingly, for example, a "top" feature may sometimes be disposed below a "bottom" feature (and so on) in some arrangements or embodiments. Further, references to particular rotational or other movements (e.g., counterclockwise rotation) are generally intended as a description only of movement relative a reference frame of a particular example of illustration.

It is also to be understood that any reference to an element herein using a designation such as "first," "second," and so forth does not limit the quantity or order of those elements, unless such limitation is explicitly stated. Rather, these designations may be used herein as a convenient method of distinguishing between two or more elements or instances of an element. Thus, a reference to first and second elements does not mean that only two elements may be employed or that the first element must precede the second element in some manner.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as, e.g., "either," "one of," "only one of," or "exactly one of." Further, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C. In general, the term "or" as used herein only indicates exclusive alternatives (e.g., "one or the other but not both") when preceded by terms of exclusivity, such as, e.g., "either," "one of," "only one of," or "exactly one of."

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize that the examples provided herein have many useful alternatives and fall within the scope of embodiments of the invention.

It is also to be appreciated that material handling vehicles are designed in a variety of classes and configurations to perform a variety of tasks. It will be apparent to those of skill in the art that the present disclosure is not limited to any specific material handling vehicle, and can also be provided with various other types of material handling vehicle classes and configurations, including, for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles.

As noted above, comparative examples of obstacle detection systems in industrial vehicles may not address all common use cases. For example, vehicles which rely on LiDAR systems may be capable of detecting obstacles in the vehicle's travel path but cannot fully address the case where a person suddenly appears from the side into the path of the truck. The ability to sense obstacles on the side of the AGV is especially challenging given that the AGVs are often working in close proximity to racks or other trucks. With only the ability to see an obstacle within a short distance from the side of the AGV, the comparative AGV may have only a limited amount of time to make other decisions.

Comparative systems that track people by the use of a badge may be operable in an industrial environment but require each person or obstacle to be fitted with a badge or other sensor in order to work. There may also be additional warehouse infrastructure put into place for such systems to work, and any infrastructure changes (e.g., by moving racks) will have an impact on the obstacle sensing that must be considered. In any event, such comparative systems may not be capable of use in a non-industrial setting where it isn't feasible to fit everyone with a badge. For example, in a retail store, it may not be feasible or desirable to fit customers with badges.

Systems that use cameras and LOS to predict a human nearby need enough of an image to determine that a detected obstacle is human. However, if the human is partially obscured (e.g., is carrying a large box, is pushing a cart, is behind a rack, etc.), the human does not have a typical profile (e.g., is in a wheelchair, is a child, etc.), or the obstacle is not human (e.g., is a dog, is another vehicle, etc.), the comparative systems may not have sufficient information to predict what the obstacle is. This is especially true for systems which implement artificial intelligence (AI) and which have not been trained on the above-listed types of obstacles. Furthermore, if the AGV is coming to the end of an aisle, pallets or goods on a shelf may hinder the system from seeing enough of a human or other obstacle that is approaching the vehicle at a right angle.

Systems and methods according to various aspects of the present disclosure may implement a thermal imaging system that looks in the direction of travel (e.g., forward and reverse) along with both sides of the AGV. Any heat-emitting obstacle will give off a thermal image, even if the obstacle is carrying boxes, is pushing a cart, is in a wheelchair, is another truck, is a pet dog, and the like. Thus, the system will still have knowledge that an obstacle is there. In some implementations, continued monitoring of the heat-emitting obstacle can provide information as to whether or not the obstacle is getting closer. If the obstacle is getting closer, the AGV may predict if the paths will cross and can make decisions regarding next steps. Thus, systems and methods in accordance with the present disclosure reduce the likelihood of someone or something moving in front of an AGV without the AGV already knowing of that possibility. Furthermore, in a case of an AGV approaching the end of an aisle, with thermal sensors there is an increased possibility of seeing at least a portion of a heat-emitting obstacle through/around other items such as boxes and pallets, thus further improving knowledge. Systems and methods in accordance with the present disclosure need not see the whole obstacle to know that something is there and begin preparing to react to the obstacle.

The present disclosure results in systems and methods with many advantages, including but not limited to: usability in a wider range of environments, including both industrial and non-industrial environments; improved effectiveness of the sensor system in predicting that a heat-emitting obstacle may cross the travel path of the AGV; realizing the ability to sense and provide information to the AGV for determining next steps, regardless of the size of the thermal image; providing the ability to sense a child, adult, person in a wheelchair, person carrying or pushing a load, another truck, a pet, or any other obstacle that gives off a thermal image; avoiding the need for an investment in additional infrastructure, as the needed equipment may be provided onboard the truck, thus providing ease of adaptability to existing facilities; the ability to look "around" or "through" pallets and racks without being obstructed or sensing fixed obstacles, thus providing knowledge of the presence of a heat-emitting obstacle even if the AGV is only able to detect a portion of the obstacle; and the like.

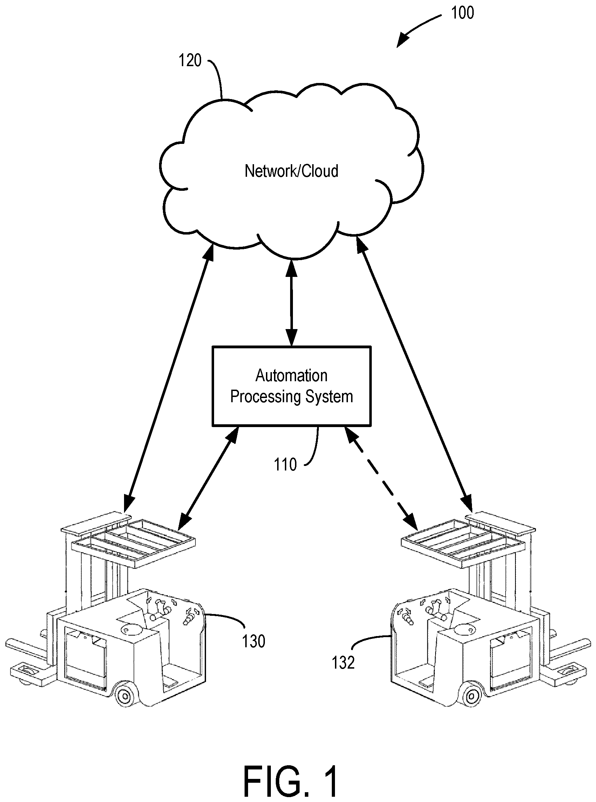

Systems and methods, e.g. an obstacle detection system and method for controlling an AGV, according to various aspects of the present disclosure may comprise an AGV operating based on thermal image sensing. Referring to FIG. 1, a system for AGV control 100, e.g. an obstacle detection system, may comprise an AGV 130 in communication with an automation processing system (APS) 110. The APS 110 may determine the presence of an obstacle and provide control instructions to the AGV 130. In some examples, an individual AGV 130 may comprise the APS 110, for example integrated into the AGV 130 electronics/control system or otherwise physically located with the AGV 130. By including the APS 110 in the AGV 130, communication latency with other on-vehicle functionality may be reduced and/or connection quality and reliability may be improved. In other examples, however, the APS 110 may be located separate from the AGV 130, for example located at a fixed position within the environment, external to the environment (e.g., in a control room, cloud computing server, etc.), or the like. Such implementations may provide improved processing power. In some examples, the APS 110 may be located on a wall, shelving unit, ceiling, or the like. In some examples, the APS 110 may comprise a plurality of APSs, for example networked APSs.

In some examples, the APS 110 may be communicatively coupled with a network 120, through which it may be in communication with one or more other AGVs and/or other APSs (e.g., an APS of a separate AGV 132). In some examples, the AGV 130 may be communicatively coupled to the network 120, through which it may be in communication with one or more other AGVs 132 and/or APSs (e.g., a standalone APS or an APS of a separate AGV 132).

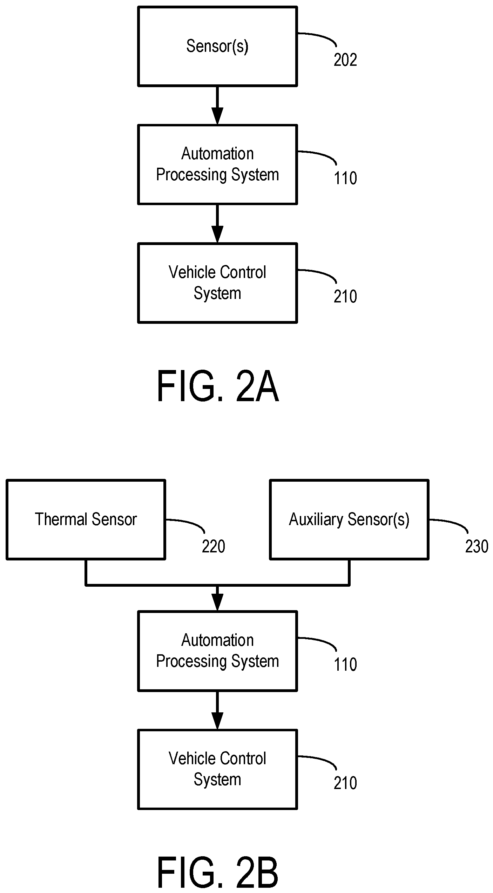

Referring to FIGS. 2A and 2B, the system for AGV control 100 may further comprise one or more sensors 202. In some examples, the APS 110 may receive the output of the one or more sensors 202. The sensor 202 may comprise any suitable sensor for observing the thermal signature of the environment and determining (whether alone or in combination with other sensors 202) thermal information about at least one obstacle in the environment. The sensor 202 may comprise any suitable sensor that can provide sufficient data points to identify the position of obstacles. For example, the sensor 202 may comprise an image sensor that is sensitive to wavelengths of electromagnetic radiation in the infrared range, such as long-wavelength infrared having wavelengths of 5 to 15 µm. In some examples, the sensor 202 may be physically located with the AGV 130 or with the APS 110 or may be separate from the AGV 130 and the APS 110. In some examples, the sensor 202 may be located in one or more fixed locations in the environment (e.g., in the warehouse or store), such as on a wall, shelving unit, ceiling, or the like. In such implementations, the sensor 202 may be configured to communicate with the AGV 130 (e.g., to send and/or receive information) using a wireless communication protocol, including but not limited to Wi-Fi^{®} and/or Bluetooth^{®}. The sensor 202 may be or include an active thermal imaging sensor configured to detect heat emitted by one or more obstacles, and/or a passive thermal imaging sensor configured to detect one or more non-self-heating obstacles.

Referring to FIG. 2A, in some examples the sensor 202 may comprise a thermal sensor, which may output image data based on thermal radiation received from the observed environment. Referring to FIG. 2B, in some examples the sensors 202 may comprise a thermal sensor 220 in combination with one or more auxiliary sensors 230. The auxiliary sensor 230 may be or include any one or more sensors configured to provide auxiliary image data that may be used for the APS 110 or for another purpose. For example, the auxiliary sensor 230 may be or include a grayscale image sensor, an RGB image sensor, an RGBD (RGB + Depth, for example using stereoscopic imaging, time-of-flight, etc.) image sensor, a sonar sensor, a radar sensor, a LiDAR sensor, and the like.

In some examples, the APS 110 may operate individually on the outputs of a plurality of sensors 202, for example separately determining thermal information from each sensor output. In some examples, the APS 110 may operate on a combination of the outputs of a plurality of sensors 202, for example by combining the output image data from a plurality of image sensors (e.g., to create a 180-degree view, 270-degree view, 360-degree view, etc.) prior to determining thermal information. In one particular example, the plurality of sensors 202 may include four or more sensors 202, with at least one sensor 202 facing forward relative to the AGV 130, at least one sensor 202 facing backward relative to the AGV 130, at least one sensor 202 facing to the right relative to the AGV 130, and at least one sensor 202 facing to the left relative to the AGV 130. In some examples, the APS 110 may operate on a combination of the output of a plurality of different sensor types, for example by combining visible-light data from an RGB sensor with thermal data from a thermal sensor.

In some examples, the AGV 130 may comprise a vehicle control system 210 (VCS, which may also be referred to as Vehicle Manager) which may facilitate operation of the AGV 130. The VCS 210 may receive control requests from devices that do not have direct access to control systems of the AGV 130 and may send appropriate signals to various systems of the AGV 130. For example, the VCS 210 may receive control requests from a horn button, throttle control, light switch, fork control, or the like, and may send appropriate signals to the various systems of the AGV 130 such as a speaker/horn device, drive unit, lights, fork actuators, or the like.

The APS 110, after operating on the received sensor 202 output, may send one or more control instructions (e.g., control signals, formatted data, requested action, etc.) to the VCS 210 to limit or otherwise control operation of the AGV 130. In some examples, the control instructions may not be finally acted upon by the AGV 130. In other words, the APS 110 may or may not have final control over operation of the AGV 130.

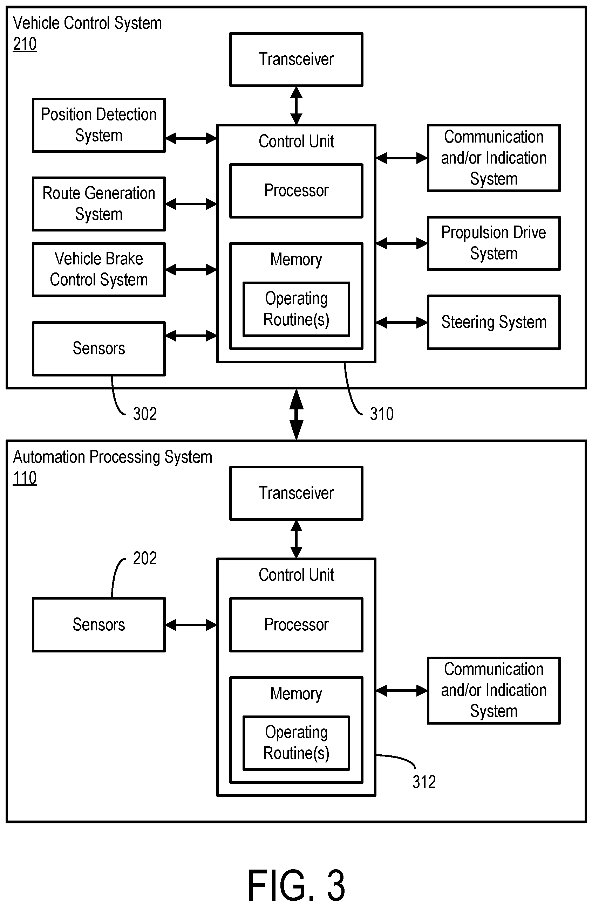

Referring to FIG. 3, the VCS 210 may comprise and/or be communicatively coupled with any combination of software, electronic components, and/or processing circuitry suitable for controlling operation of the AGV 130. In some examples, the VCS 210 may comprise a vehicle brake control system, a propulsion drive system, and a steering system configured to perform respective operations to control movement of the AGV 130. In some examples, the VCS 210 may comprise a position detection system and/or a route generation system to determine the position of the AGV 130 and/or a route for the AGV 130 to follow. In some examples, the VCS 210 may comprise, or may be otherwise configured to receive output of, sensors 302, which may be used by one or more of the various systems of the VCS 210. For example, one or more sensors 302 may be used by the position detection system, vehicle brake control system, route generation system, and so on. In some examples, the VCS 210 may comprise a communication and/or indication system configured to provide notification to various devices and/or bystanders of potential contact, for example. In some examples, the VCS 210 may comprise a transceiver, for example for wired or wireless communication to the communication network 120, the APS 110, other AGVs 132, other computer systems, or the like.

The VCS 210 may comprise a control unit 310 in communication with one or more of the various systems of the VCS 210. The control unit 310 may be configured to send and/or receive information (e.g., including instructions) to/from the various systems. The control unit 310 may comprise processing circuitry configured to execute operating routine(s) stored in a memory. As noted above, the control unit 310 may comprise, for example, a processor, microcontroller, ASIC, FPGA, and the like, any other digital and/or analog components, as well as combinations of the foregoing, and may further comprise inputs and outputs for processing control instructions, control signals, drive signals, power signals, sensor signals, and the like. In some implementations, the control unit 310 may be configured to implement cloud processing, for example by invoking a remote processor.

The APS 110 may be communicatively coupled with the VCS 210, for example using wired and/or wireless communication. The APS 110 may comprise any combination of software, electronic components, and/or processing circuitry suitable for providing control instructions (e.g., control signals) to various components of the AGV 130, for example to or through the VCS 210. In some examples, the APS 110 may comprise the same software, electronic components, and/or processing circuitry as the VCS 210. In some examples, the APS 110 may comprise sensors or may be otherwise configured to receive sensor output, such as from sensors 202. In some examples, the sensors used by the APS 110 and VCS 210 may comprise the same sensors. In some examples, the APS 110 may comprise a communication and/or indication system similar to the VCS 210 communication and/or indication system described above. In some examples, the APS 110 may comprise a transceiver, for example for wired or wireless communication to the communication network 120, the VCS 210, other AGVs 132, other computer systems, or the like.

The APS 110 may comprise a control unit 312 in communication with one or more of the various systems of the APS 110. The control unit 312 may be configured to send and/or receive information (e.g., including instructions) to/from the various systems. Whether integrated with, or separate from another computing device (e.g., the control unit 310 of the VCS 210), the APS 110 control unit 312 may comprise processing circuitry configured to execute operating routine(s) stored in a memory. In some examples, the APS 110 control unit 312 and VCS 210 control unit 310 comprise the same control unit.

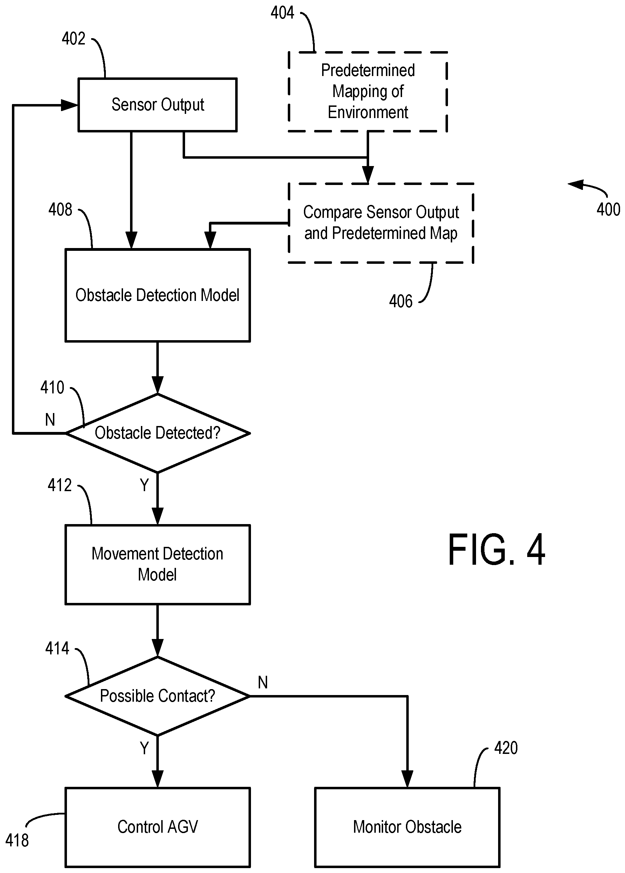

Referring to FIG. 4, a method for AGV control 400 may comprise the APS 110 receiving information from one or more sensors 202 and determining whether to send a control instruction to the AGV. In some examples, the method for AGV control 400 may be implemented in the APS control unit 312, for example, as operating routines stored in memory (e.g., as software). In some examples, the method for AGV control 400 may be continuously operating when the AGV 130 is turned on or otherwise in operation.

The APS 110 may receive a sensor output at operation 402, for example in the form of thermal image data. In some examples, the APS 110 may receive additional sensor output (e.g., RGB image data, depth data, LiDAR data, sonar data, radar data, etc.) at operation 402. In some examples, in addition to or instead of the additional sensor output, the APS 110 may receive or otherwise have a predetermined map of the environment at operation 404 and may compare the predetermined map with the received sensing information at operation 406. Operation 406, if present, may identify discrepancies between the sensor output and the expected output based on the predetermined mapping. For example, the predetermined mapping may include information regarding a known environmental heat source (e.g., a furnace, a furnace vent, a stationary machine or motor, a dehumidifier, etc.).

The method for AGV control 400 may provide the sensor output and, if implemented, the results of the comparison between the sensor output and the predetermined map, to an obstacle detection model at operation 408. In some examples, the APS 110 may use an obstacle detection machine learning (ML) model at operation 408, for example based on a machine learning algorithm (e.g., such as a deep learning algorithm), to perform this determination. As used herein, an ML algorithm may comprise a procedure run on a training data set to create a ML model, and an ML model is configured to receive new input data and generate an estimation, prediction, classification, or the like for the new input data. The ML model may be pre-trained, and/or may be trained on potential obstacles (e.g., employees of the physical location where the system is to be implemented, pets, persons in wheelchairs, partially obscured heat-emitting obstacles, etc.). Additional description is provided further below. In some examples, the obstacle detection ML model may comprise a neural net trained to find where obstacles are within the surroundings of the AGV. The ML model may be trained to ignore fixed heat sources that are encountered repeatedly (e.g., a furnace, a furnace vent, a stationary machine or motor, a dehumidifier, etc.), for example if operation 406 is omitted. In some examples, obstacle detection may comprise machine/computer vision techniques.

In some examples, the obstacle detection ML model may operate at step 408 in the APS 110 control unit 312. The obstacle detection ML model may be stored in the memory of the APS 110 control unit 312 in some implementations. In other implementations, the obstacle detection ML model may be stored in the memory of a remote device (e.g., in the cloud). The control unit 312 processing circuitry may execute operating routines including the obstacle detection ML model and may generate an output based on one or more of the received sensor data from operation 402. In some examples, the obstacle detection ML model may comprise any suitable ML model for estimating whether an obstacle is in view of the relevant sensors of the AGV 130.

Based on the output of the obstacle detection ML model (or other determination model) at step 408, the method for AGV control 400 then determines whether an obstacle is detected at operation 410. In some examples, the obstacle detection determination at operation 410 may be based solely on the output of the obstacle detection ML model from operation 408, and in other examples it may include other factors in the determination. In some examples, if an obstacle is not detected, then the APS 110 may return to operation 402 to provide continued monitoring of the environment as detected by the sensors 202. If an obstacle is identified, then the APS 110 may send relevant information to the AGV 130 and/or other AGVs 132 to implement a movement detection model at operation 412. The information may include the location of the obstacle, size of the obstacle, motion of the obstacle, and the like. Operation 412 may occur over the course of multiple frames of thermal image data from the sensors 202, thereby to incorporate data over time regarding the obstacle. In some examples, if an obstacle is detected, the method for AGV control 400 may then isolate the portion of the sensor 202 output having information relating to the obstacle. For example, thermal image data may be cropped to focus on the portion of the image having an obstacle.

The APS 110 may use a movement detection ML model at operation 412, which may be the same as or different from the obstacle detection ML model. As noted above, an ML algorithm may comprise a procedure run on a training data set to create a ML model, and an ML model is configured to receive new input data and generate an estimation, prediction, classification, or the like for the new input data. The ML model may be pre-trained, and/or may be trained on movement patterns of potential obstacles (e.g., employees of the physical location where the system is to be implemented, pets, persons in wheelchairs, partially obscured heat-emitting obstacles, etc.). Additional description is provided further below. In some examples, the movement detection ML model may comprise a neural net trained to determine the motion of obstacles within the surroundings of the AGV. In some examples, movement detection may comprise machine/computer vision techniques.

In some examples, the movement detection ML model may operate at step 412 in the APS 110 control unit 312. The movement detection ML model may be stored in the memory of the APS 110 control unit 312. The control unit 312 processing circuitry may execute operating routines including the movement detection ML model and may generate an output based on one or more of the received sensor data from operation 402. In some examples, the movement detection ML model may comprise any suitable ML model for estimating whether an obstacle in view of the relevant sensors of the AGV 130 is in motion.

Based on the output of the movement detection ML model (or other determination model) at operation 412, the method for AGV control 400 then determines whether a detected obstacle is the source of a possible contact at operation 414. In some examples, the contact determination at operation 414 may be based on the output of the movement detection ML model from operation 412 in conjunction with data regarding motion of the AGV 130 itself (e.g., from accelerometers or other positioning sensors of the sensors 202) and/or with the predetermined mapping of the environment from operation 404. If a contact is deemed possible or likely, the APS 110 may decide whether to send a control instruction to the AGV 130 at operation 418. For example, the APS 110 may cause AGV 130 to stop until the detected obstacle has changed its movement such that the obstacle no longer presents a possibility of contact; may cause AGV 130 to change a course of its own movement to avoid the potential contact, etc. If a contact is deemed impossible or unlikely, the APS 110 may decide to continue monitoring the obstacle at operation 420. The determination in operation 414 is not limited to instances where the detected obstacle is in motion. In some implementations, the movement detection model 412 may detect that the obstacle is not moving but is in a path of the AGV 130; thus, at operation 414 it may be determined that a lack of movement is a source of a possible contact.

The obstacle detection ML model and/or the movement detection ML model may be further configured to consider additional information. In one example, the ML model(s) may be configured to learn that there is a higher probability of people-traffic at certain times (e.g., on a path to a lunchroom at 12 pm, near a restroom, near entry/exit doors, at break time). In such examples, the ML model(s) may make or modify predictive decisions to adjust performance of the AGV 130 (e.g., to slow down and/or change route based on the time of day).

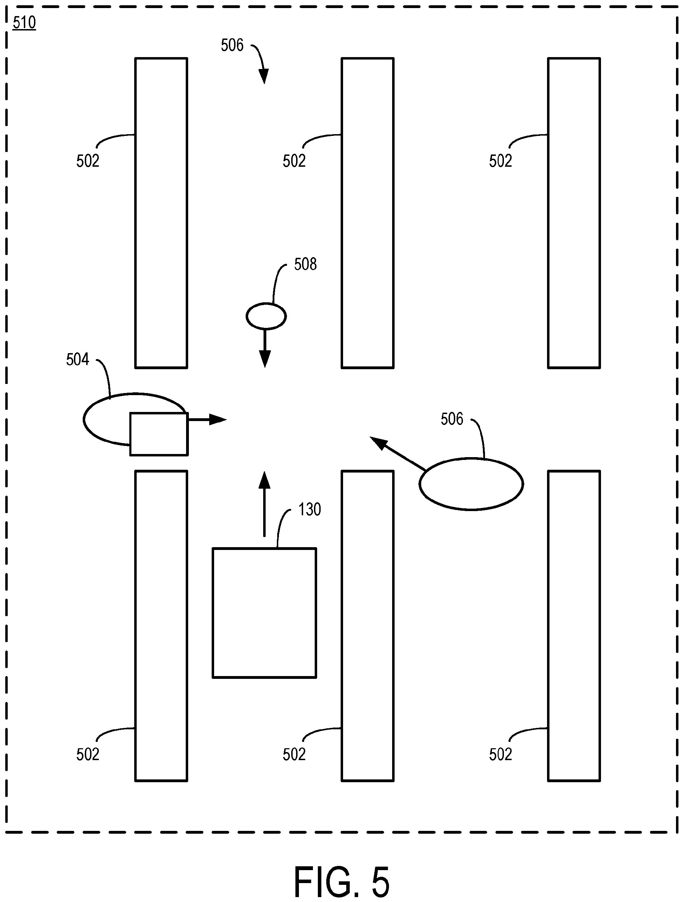

In some examples, based on the possible contact determined in step 414, and possibly the determination of whether to send a control instruction as described above, the method for AGV control 400 (e.g., the APS 110) may then send one or more control instructions to the AGV 130, for example to the VCS 210. For example, referring briefly to FIG. 5, one or more obstacles 504, 506, 508 may be in a vicinity of an AGV 130 moving in an aisle 506 (e.g., between shelving units 502). For purposes of illustration, obstacle 504 is a person holding a large box, obstacle 506 is a person that is obscured from the AGV 130 by one of the shelving units 502, and obstacle 508 is a pet. In each of these instances, the use of thermal imaging as described above may permit obstacle detection even where comparative imaging modalities (e.g., LiDAR, RGB, etc.) are incapable of detection. Based on the determined possible contact at operation 414, the APS 110 may send a control instruction to the VCS 210 to stop (or to begin a new travel path). If the obstacle or obstacles that were the source of the possible contact change its/their movement such that contact is no longer likely, the APS 110 may send a control instruction to the VCS 210 to resume travel of the AGV 130 (or revert to the previous travel path). The VCS 210 may receive the control instruction(s) and may act upon it, for example by controlling the propulsion drive system, vehicle brake control system, route generation system, and the like.

In some examples, based on the possible contact determined in step 414, and possibly the determination of whether to send a control instruction as described above, the method for AGV control 400 (e.g., the APS 110) may send information to other AGVs 132. For example, in some examples, APS 110 (e.g., using the obstacle detection ML model and/or the movement detection ML model) may be configured to track the position of obstacles moving through the environment (for example facility 510 in FIG. 5). The APS 110 may communicate (e.g., via network/cloud 120) this information to the AGV 130 and/or other AGVs 132 in the environment, for example including control instruction(s). The various AGVs may, using the VCS 210 route generation system for example, update their routes to avoid the expected path of the obstacle(s), thereby reducing the possibility of contact. In some examples, the AGV 130 may comprise lights and/or other indicators to indicate travel characteristics of the AGV 130 to bystanders.

The ML algorithm(s) for the ML models discussed above may be implemented on any suitable computing system. In some examples, the APS 110 control unit 312 and/or VCS 210 control unit 310 may be configured to perform the machine learning algorithm. In some examples, a separate server (e.g., in the cloud 120) may be configured to perform the ML algorithm. The ML algorithm may be configured to construct a ML model based on the training data set. The training data set may comprise example inputs and their actual outputs (e.g., classification). The generated ML model can map the inputs to the outputs based on the provided training set. The ML model may be updated over time, for example as the training data set becomes larger, is improved, or is otherwise updated. In some examples, the APS 110 may be provided with the updated ML model(s) from time to time.

The ML algorithm may be configured to perform machine learning using various methods, such as decision tree learning, associates rule learning, artificial neural networks, recurrent artificial neural networks, long short term memory neural networks, inductive logic programming, support vector machines, clustering, Bayesian networks, reinforcement learning, representation learning, similarity and metric learning, sparse dictionary learning, genetic algorithms, k-nearest neighbor (KNN), among others.

As described above, the ML algorithm is configured to perform a particular task, for example training a model to identify whether an obstacle is present or training a model to identify or otherwise estimate specific contact possibilities, such as those caused by the motion of obstacles, and the like. The task for which the ML model is trained may vary based on, for example, the type of material handling vehicle, the type of sensor output available to the ML model, availability of processed sensor output to the ML model (e.g., comparison sensed vs. known environment), the environment in which the AGV 130 operates, the location of the relevant sensors on the AGV 130 or otherwise in the environment, and so on.

By implementing a thermal imaging system as described above, either instead of or in addition to additional imaging modalities, the present disclosure provides, as noted above, usability in a wider range of environments, including both industrial and non-industrial environments; improved effectiveness of the sensor system in predicting that a heat-emitting obstacle may cross the travel path of the AGV; realizing the ability to sense and provide information to the AGV for determining next steps, regardless of the size of the thermal image; providing the ability to sense a child, adult, person in a wheelchair, person carrying or pushing a load, another truck, a pet, or any other obstacle that gives off a thermal image; avoiding the need for an investment in additional infrastructure, as the needed equipment may be provided onboard the truck, thus providing ease of adaptability to existing facilities; the ability to look "around" or "through" pallets and racks without being obstructed or sensing fixed obstacles, thus providing knowledge of the presence of a heat-emitting obstacle even if the AGV is only able to detect a portion of the obstacle; and the like.

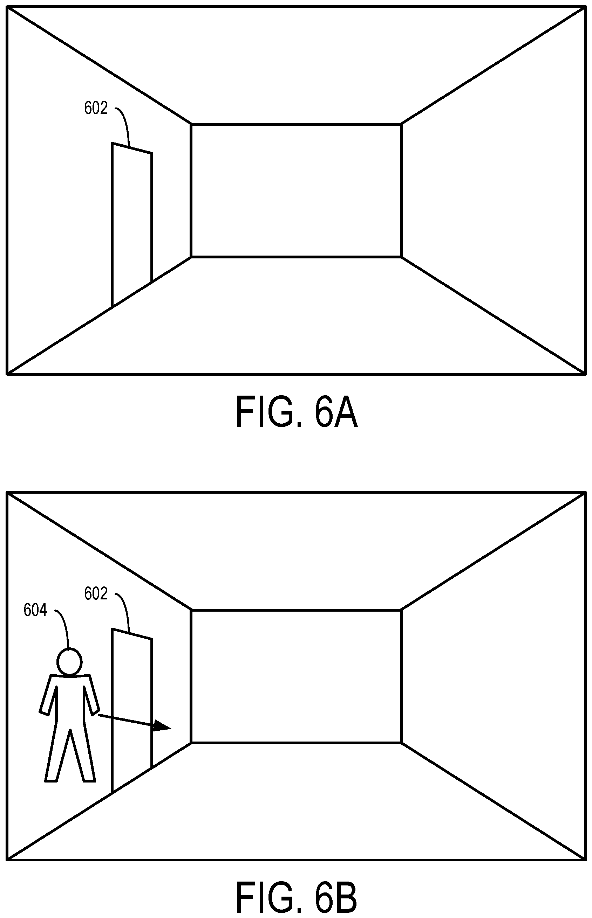

FIGS. 6A and 6B illustrate some of these advantages with respect to a comparative example which does not include an imaging system. FIG. 6A illustrates a detection field for a comparative imaging system that is mounted on an AGV so as to be forward-facing. In this comparative example, the AGV is traveling down a corridor which has a doorway 602 in one wall of the corridor. Because the comparative example is only equipped with imaging modalities such as LiDAR or RGB imaging, the comparative example may determine that there is no possibility of any contact and may continue traveling down the corridor. FIG. 6B illustrates a detection field for an imaging system in accordance with the present disclosure, that is also mounted on an AGV so as to be forward-facing (although, as noted above, multiple thermal image sensors may be used to provide a 360-degree field of view), and which is in the same physical situation as that illustrated in FIG. 6A. By using thermal imaging, the imaging system of FIG. 6B is able to detect that there is a person 604 that is moving toward and possibly through the doorway 602 and into the travel path of the AGV. Thus, the system of the present disclosure is capable of detecting the person 604 even though the system according to a comparative example is incapable of so detecting.

Within this specification, embodiments have been described in a way which enables a clear and concise specification to be written, but it is intended and will be appreciated that embodiments may be variously combined or separated without parting from the invention. For example, it will be appreciated that all preferred features described herein are applicable to all aspects of the disclosed technology described herein.

Thus, while the disclosed technology has been described in connection with particular embodiments and examples, the disclosed technology is not necessarily so limited, and that numerous other embodiments, examples, uses, modifications and departures from the embodiments, examples and uses are intended to be encompassed by the claims attached hereto. The entire disclosure of each patent and publication cited herein (if any) is incorporated by reference, as if each such patent or publication were individually incorporated by reference herein.

Various features and advantages of the disclosed technology are set forth in the following claims.

## Claims

1. An obstacle detection system for an autonomous guided vehicle (AGV) (130) having a vehicle control system (VCS) (210), the obstacle detection system comprising:
a thermal imaging sensor (202); and
an automation processing system (APS) (110) having a processor and a memory, the APS (110) coupled with the thermal imaging sensor and being configured to:
receive sensor data based on an output of the thermal imaging sensor,
process the sensor data to determine at least one of a presence or a motion of a heat-emitting obstacle (504, 506, 508) in a vicinity of the AGV (130),
generate, based on the processed sensor data, an output comprising an indication of a control action for the AGV (130), and
send the generated output to the VCS (210).

2. The obstacle detection system of claim 1, wherein the APS (110) includes a machine learning control program stored in at least one of the memory of the APS (110) or a remote memory.

3. The obstacle detection system of claim 2, wherein the APS (110) is configured to provide the sensor data to the machine learning control program, and to receive a detection output from the machine learning control program, the detection output indicating the presence of the heat-emitting obstacle (504, 506, 508) in the vicinity of the AGV (130).

4. The obstacle detection system of claim 2 or 3, wherein the APS (110) is configured to provide the sensor data to the machine learning control program, and to receive a movement output from the machine learning control program, the movement output indicating the motion of the heat-emitting obstacle (504, 506, 508) in the vicinity of the AGV (130).

5. The obstacle detection system of any of the claims 1 to 4, further comprising an auxiliary sensor (230), wherein the auxiliary sensor (230) includes at least one of a grayscale image sensor, an RGB image sensor, an RGBD image sensor, a sonar sensor, a radar sensor, or a LiDAR sensor.

6. The obstacle detection system of claim 5, wherein the sensor data includes a comparison of the output of the thermal imaging sensor (202) and an output of the auxiliary sensor (230).

7. The obstacle detection system of any of the claims 1 to 6, wherein the APS (110) operates in an environment and the sensor data includes a comparison of the output of the thermal imaging sensor (202) and a predetermined map of the environment.

8. The obstacle detection system of any of the claims 1 to 7, wherein the thermal imaging sensor (202) is one of a plurality of thermal imaging sensors, and wherein the plurality of thermal imaging sensors are disposed so as to provide thermal detection in a 360-degree field of view.

9. A method for controlling an autonomous guided vehicle (AGV) (130), comprising:
receiving, by an automation processing system (APS) (110) of the AGV (130), a sensor data, the sensor data being based on an output of a thermal imaging sensor (202);
processing, by a processor of the AGV (130), the sensor data to determine at least one of a presence or a motion of a heat-emitting obstacle (504, 506, 508) in a vicinity of the AGV (130);
generating, by the processor of the AGV (130) and based on the processed sensor data, an output comprising an indication of a control action for the AGV (130); and
sending the generated output to a vehicle control system (VCS) (210) of the AGV (130).

10. The method of claim 9, wherein the thermal imaging sensor (202) is mounted on the AGV (130).

11. The method of claim 9 or 10, wherein the processing is performed using a machine learning control program, and the machine learning control program is stored in at least one of a memory of the APS (110) or a remote memory.

12. The method of claim 11, wherein the processing includes providing the sensor data to the machine learning control program and receiving a detection output from the machine learning control program, the detection output indicating the presence of the heat-emitting obstacle (504, 506, 508) in the vicinity of the AGV (130).

13. The method of claim 11 or 12, wherein the processing includes providing the sensor data to the machine learning control program and receiving a movement output from the machine learning control program, the movement output indicating the motion of the heat-emitting obstacle (504, 506, 508) in the vicinity of the AGV (130).

14. The method of any of the claims 9 to 11, wherein the sensor data includes a comparison of the output of the thermal imaging sensor (202) and a predetermined map of an environment in which the APS (110) operates.

15. The method of any of the claims 9 to 14, wherein the thermal imaging sensor (202) is one of a plurality of thermal imaging sensors, and wherein receiving the sensor data includes receiving data from the plurality of thermal imaging sensors corresponding to thermal detection in a 360-degree field of view.
